(19) Europäisches Patentamt
European Patent Office
Office européen des brevets

(11) **EP 4 401 294 A1**

(12) **EUROPEAN PATENT APPLICATION**

(43) Date of publication:
**17.07.2024 Bulletin 2024/29**

(21) Application number: **23151472.0**

(22) Date of filing: **13.01.2023**

(51) International Patent Classification (IPC):
**H02M 3/158** $^{(2006.01)}$    **H02M 3/07** $^{(2006.01)}$
**H02M 7/483** $^{(2007.01)}$    **H02M 1/36** $^{(2007.01)}$

(52) Cooperative Patent Classification (CPC):
**H02M 3/158; H02M 1/36; H02M 3/07; H02M 3/072; H02M 3/1582; H02M 7/4837**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Siemens Aktiengesellschaft**
**80333 München (DE)**

(72) Inventors:
• **GHAT, Mahendra**
  **400095 Mumbai, Maharashtra (IN)**

• **KADAM, Abhijit**
  **421503 Thane, Maharashtra (IN)**
• **KAKDE, Vishwajeet**
  **421204 Bengaluru, Karnataka (IN)**
• **MARATHE, Akshay**
  **400067 Bengaluru (IN)**

(74) Representative: **Patentanwaltskanzlei WILHELM & BECK**
**Prinzenstraße 13**
**80639 München (DE)**

(54) **MULTI-LEVEL BUCK-BOOST CONVERTER**

(57)     A DC/DC power converter (200) operable in a buck and/or a boost mode, a control unit (201), and a method of controlling the power converter (200) are provided. The power converter (200) includes a pull-up path having at least two series connected switches (S1-S2) and/or a pull-down path having at least two series connected switches (S3-S4), a first capacitor (C1) connected across the series connected switches (S1-S4) and between a first terminal (J1) and a second terminal (J2) of the power converter (200), a flying capacitor ($C_{fy}$) connected to a connecting node of the pull-up path and a connecting node of the pull-down path, an LC circuit, and an auxiliary switch (T) connected between the first terminal (J1) and a common node formed between a first terminal of the first capacitor (C1) and one of the at least two series connected switches (S1) of the pull-up path.

FIG 2

**EP 4 401 294 A1**

**Description**

The present disclosure relates to a power converter. More particularly, the present disclosure relates to a multi-level unidirectional or bidirectional power converter such as a buck-boost converter employable in photovoltaic systems.

The popularity of photovoltaic (PV) systems is growing owing to clean energy requirements. Recent innovations happening in this area are focussed towards bringing down the cost associated with PV systems and therefore, are an important aspect behind the development and commercialization of PV systems.

At present, most of the PV systems are rated at 1000Vdc, which is the maximum system voltage for most PV modules. This limitation in voltage causes PV systems to become bigger in size due to ohmic losses playing a part in the system losses. Also, such voltage constraint imposes a limit on the maximum number of PV modules that can be connected in a string. This in turn leads to an increase in the number of combiner boxes combining outputs of each string of PV modules for connection to an inverter. The increase in the number of combiner boxes is directly proportional to a desired size of a PV plant.

Conventional solution to address the aforementioned problem involves increasing the DC voltage to the maximum limit of about 1500V as specified in the IEC 62109-1, Edition 1.0 2010-04, standard for low voltage equipment. This 50% increase in the DC voltage allows a reduction in the DC current, which will reduce the ohmic losses considerably. Also, this increase in the DC voltage, allows more PV modules to be connected in series in the string, reducing the amount of combiner boxes.

However, this 1500V DC voltage causes another issue in terms of voltage stress on the switches of the PV converter. A solution to this problem is using multilevel converters. One such solution involves connecting multilevel buck-boost converter on PV side to step up or step down the voltage corresponding to desired voltage supported by dc link of inverter, in its buck or boost mode of operation, wherein the inverter is connected to power grid. Use of such buck-boost converter allows multiple PV arrays to be connected to one central inverter to feed the power to grid. Such a converter may be multilevel including three, four, five, etc., levels. Moreover, the converter may be flying capacitor type, neutral point clamped type or some other type. Typically, the flying capacitor type converter is preferred because of its inherent advantages, such as lower switching losses, lower filter requirement offered over other types of two level buck or boost converters.

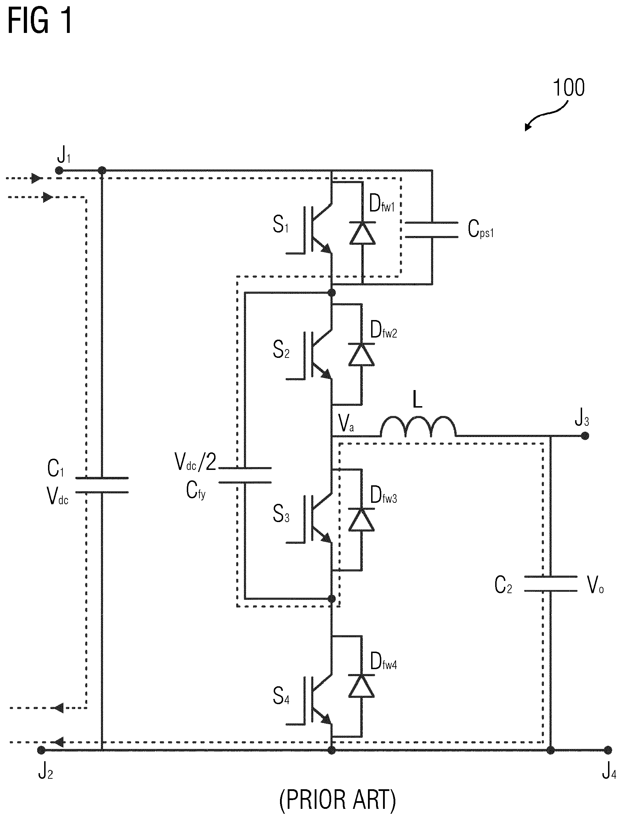

FIG 1 illustrates a three-level flying capacitor buck-boost converter 100 according to state of the art. The buck-boost converter 100 comprises four series connected switches S1-S4 and a flying capacitor $C_{fy}$ connected in parallel across two of the switches S2 and S3. The buck-boost converter 100 also comprises an LC circuit, the inductor L of which, is connected to a mid-point formed between the switches S2 and S3 such that a voltage $V_A$ appears at this mid-point during operation of the buck-boost converter 100. The LC circuit includes a second capacitor C2 connected to the inductor L. The buck-boost converter 100 can operate in a buck mode of operation or a boost mode of operation.

In the buck mode of operation, the switches S1 and S2 are operational and the switches S3 and S4 may be replaced with diodes D1 and D2 respectively (not shown). When an input voltage Vdc appears across a first capacitor C1, that is, the input capacitor of the buck converter 100, the voltage appearing across the flying capacitor $C_{fy}$ can be maintained at about half of Vdc, that is Vdc/2, by operating the switches S1 and S2 in various modes as shown in the table 1 below, wherein 1 stands for an ON state and 0 stands for an OFF state of each of the switches S1, S2, and RB and FB stand for reverse biased and forward biased states respectively of the diodes D1 and D2. Here, the power flow is from the first capacitor C1 positioned at the input side of the buck converter 100 to a second capacitor C2 positioned on the output side of the buck converter 100.

Table 1

| Mode | S1 | S2 | D1 | D2 | $V_A$ |
|------|----|----|----|----|-------|
| 1 | 1 | 1 | RB | RB | $V_{dc}$ |
| 2 | 1 | 0 | FB | RB | $V_{dc}/2$ |
| 3 | 0 | 1 | RB | FB | $V_{dc}/2$ |
| 4 | 0 | 0 | FB | FB | 0 |

Similarly, in the boost mode of operation, that is, when the buck-boost converter 100 is acting as a boost converter 100, the switches S3 and S4 are operational and the switches S1 and S2 may be replaced with diodes D1 and D2 respectively (not shown). In this case the power flow is from the second capacitor C2 positioned at the input side of the boost converter 100 to the first capacitor C1 positioned at the output side of the boost converter 10. When an output voltage Vdc appears across the first capacitor C1 of the boost converter 100, the voltage appearing across the flying capacitor $C_{fy}$ can be maintained at about half of Vdc, that is Vdc/2, by operating the switches S3 and S4 in various modes as shown in the table 2 below, wherein 1 stands for an ON state and 0 stands for an OFF state of each of the switches S3, S4, and RB and FB stand for reverse biased and forward biased states respectively of the diodes D1 and D2.

Table 2

| Mode | S3 | S4 | D1 | D2 | $V_A$ |
|------|----|----|----|----|-------|
| 1 | 1 | 1 | RB | RB | 0 |
| 2 | 1 | 0 | FB | RB | $V_{dc}/2$ |
| 3 | 0 | 1 | RB | FB | $V_{dc}/2$ |
| 4 | 0 | 0 | FB | FB | $V_{dc}$ |

By using these four modes of operation namely Mode 1, Mode 2, Mode 3 and Mode 4 as shown in the Table 1 and the Table 2, the output voltage $V_A$ can be controlled to a desired voltage level of Vdc/2. In all these modes of operations, if the voltage across flying capacitor $C_{fy}$ is maintained as Vdc/2 then the maximum voltage stress across each of the switches S1, S2 or the diodes D1, D2 is Vdc/2. Thus, switches S1-S2 that have a voltage rating equivalent to half of the voltage Vdc appering across the first capacitor C1, can be used in this converter topology.

However, at an initial state when the flying capacitor $C_{fy}$ is not charged and the voltage Vdc appears across the terminals J1 and J2 between which the first capacitor C1 is connected, two current paths get formed as shown by dotted lines in the FIG 1. The first current path exists through the first capacitor C1, thereby charging C1 to Vdc. The second current path exists through the terminal J1, a parasitic capacitor $C_{ps1}$ of the switch S1 as shown in FIG 1, the flying capacitor $C_{fy}$, the switch S3 acting as a diode D1, the inductor L and the second capacitor C2 connected between terminals J3 and J4, and back to terminal J2.

Typically, the capacitance value of the parasitic capacitor $C_{ps1}$ is much smaller than that of the flying capacitor $C_{fy}$ and of the second capacitor C2. Therefore, the parasitic capacitor $C_{ps1}$ charges much faster to the voltage Vdc. Thus, the voltage appearing across the switch S1 may again go upto Vdc. However, the switches S1 and S2 have a voltage rating of half of the voltage Vdc appearing across the first capacitor C1 as described above, thus posing severe damage to the switch S1.

To address above problem, arrangements having one or more capacitors, similar to the first capacitor C1, are known to be connected across the switch S1 so as to avoid overcharging of the parasitic capacitor $C_{ps1}$. However, such solutions call for extra components including capacitors, diodes and/or additional switches thereby adding to component costs and circuit complexity. Such solutions may also lead to issues of unbalance of voltage across the first capacitor C1.

Moreover, as specified in the IEC standard 62109-1:2010 from converter reliability point of view, there is a requirement of reverse current protection from an output dc link to an input dc link in case of a short circuit happening on the input side. If a short circit condition appears at the input side of a conventional buck-boost converter 100, acting in the buck mode of operation, as shown in FIG 1, freewheeling diodes $D_{fw1}$ and $D_{fw2}$ connected across the switches S1 and S2 respectively, start conducting and a very high current flows from the terminal J3 via the inductor L, the freewheeling diodes $D_{fw2}$ and $D_{fw1}$, the shorted terminals J1 and J2, and back to the terminal J4, thus causing damage to the buck converter 100 along with high risk to operating personnel. This reverse current blocking is typically achieved via a DC breaker connected to the buck converter 100, which is operated during short circuit condition. However, this results in bulkiness and higher costs.

Furthermore, in case of a reverse polarity connection at the terminals J1-J2, the first capacitor side may get short circuited due to current passing through the freewheeling diodes $D_{fw1}$, $D_{fw2}$, $D_{fw3\ and}$ $D_{fw4}$ of the switches S1 to S4. This may cause damage to the buck-boost converter 100 due to the high current flow therethrough and/or call for additional high current handling devices to be connected with the buck converter 100 therbey increasing overall costs.

Accordingly, it is an object of the present disclosure to provide a DC/DC flying capacitor power converter, as disclosed in the detailed description of FIG 1, that does not require switches having high voltage rating, does not pose damage to such switches due to high voltages appearing thereacross during operation, is compliant with the IEC standard 62109-1:2010 from converter reliability point of view, and does not add to the costs and complexity thereof.

The DC/DC power converter disclosed herein comprises a pull-up path and/or a pull-down path and achieves the aforementioned object by an auxiliary switch connected thereto.

The pull-up path is formed by at least two series connected switches, for example, a first switch and a second switch.

The first switch is coupled between a first terminal of a first capacitor and a first terminal of a flying capacitor of the power converter. The first terminal of the first capacitor is connected to the auxiliary switch T and a second terminal of the first capacitor is connected to the second terminal of the power converter. The second switch is coupled between the first terminal of the flying capacitor and a first terminal of an inductor of the power converter.

The pull-down path is formed by at least two series connected switches, for example, a third switch and a fourth switch.

The third switch is coupled between the first terminal of the inductor and a second terminal of the flying capacitor. The

fourth switch is coupled between the second terminal of the flying capacitor and a common node formed between a second terminal of the first capacitor, the second terminal of the power converter, and a fourth terminal of the power converter.

The pull-up path and the pull-down path are series connected with one another, for example, the first switch, the second switch, the third switch and the fourth switch are connected in series with one another.

It will be understood by a person skilled in the art, that the terms, pull-up path and pull-down path are merely used to represent a set of series connected switches and are not be considered as limiting in the functionalities offered by each of the paths. These terms can be interchangeably used, for example, a pull-down path having the first switch and the second switch or a pull-up path having the third switch and the fourth switch respectively.

The first capacitor of the power converter is connected across the series connected switches of the pull-up path and the pull-down path and between a first terminal and a second terminal of the power converter.

The flying capacitor of the power converter is connected to a connecting node of the pull-up path, for example, between the first switch and the second switch, and a connecting node of the pull-down path, for example, between the third switch and the fourth switch.

The inductor of the power converter is connected to a mid-point formed between the two of the series connected switches of the pull-up path and the pull-down path, for example, the second switch and the third switch, and the third terminal of the power converter.

The second capacitor of the power converter is connected between the third terminal and a fourth terminal of the power converter. The inductor and the second capacitor form an LC circuit therebetween.

According to an embodiment of the present disclosure, the DC/DC power converter is a buck converter having the pull-up path. According to this embodiment, each of the third switch and the fourth switch of the pull-down path is replaced by a diode, that is, the pull-down path has at least two series connected diodes. Moreover, the auxiliary switch of the buck converter includes a first thyristor such that an anode of the first thyristor is connected to the first terminal of the buck converter and a cathode of the first thyristor is connected to the first terminal of the first capacitor.

According to another embodiment of the present disclosure, the DC/DC power converter is a boost converter having the pull-down path. According to this embodiment, each of the first switch and the second switch of the pull-up path is replaced by a diode, that is, the pull-up path has at least two series connected diodes. Moreover, the auxiliary switch of the buck converter includes a second thyristor such that a cathode of the second thyristor is connected to the first terminal of the boost converter and an anode of the second thyristor is connected to the first terminal of the first capacitor.

According to yet another embodiment of the present disclosure, the DC/DC power converter is a buck-boost converter having the pull-up path and the pull-down path connected to each other, for example, the second switch of the pull-up path is connected in series with the third switch of the pull-down path. The auxiliary switch of the buck-boost converter includes a first thyristor and a second thyristor forming a triac therebetween, such that an anode of the first thyristor is connected to the first terminal of the buck-boost converter and a cathode of the first thyristor is connected to the first terminal of the first capacitor, and a cathode of the second thyristor is connected to the first terminal of the buck-boost converter and an anode of the second thyristor is connected to the first terminal of the first capacitor.

The DC/DC power converter disclosed herein comprises a control unit having one or more microcontrollers and/or microprocessors coupled to the switch(es), for example, the first switch, the second switch, the third switch, the fourth switch, and/or the auxiliary switch.

The control unit selectively switches on and switches off the aforementioned switches for operating the power converter in a buck mode of operation and/or a boost mode of operation by applying gate pulses to the switches. Advantageously, the selective switching of the switches achieves the object of the invention.

The control unit determines whether the flying capacitor is charged to a predetermined voltage level of Vdc/2 and/or the second capacitor is charged to a predetermined voltage level greater than or equal to Vdc/2.

The control unit switches on the auxiliary switch when the flying capacitor or the second capacitor is charged to the respective predetermined voltage level.

When neither of the flying capacitor and the second capacitor are charged to the respective predetermined voltage level, the control unit pre-charges the flying capacitor or the second capacitor. The control unit employs a pre-charging circuit using active components and/or passive components such as switches, diodes and/or resistors. The pre-charging may also happen using an existing power supply, for example, of the photovoltaic system in which the power converter is employable.

The control unit selectively turns on one or more of the switches of the pull-up path and the pull-down path, after the auxiliary switch is turned on for protecting at least one switch of the pull-up path and the pull-down path against a voltage appearing across the first capacitor which is higher than a voltage rating of the at least one switch, during operation of the power converter. For example, during buck mode of operation, the first switch is protected and during boost mode of operation, the fourth switch is protected of the pull-up path and the pull-down path respectively.

Also, disclosed herein is a method for controlling the DC/DC power converter in a buck mode of operation and/or a boost mode of operation. The method disclosed herein employs the aforementioned control unit for controlling the power converter by selectively switching the switches so as to protect them for a higher voltage appearing thereacross.

The above mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:

FIG 1        illustrates a three-level flying capacitor buck-boost converter, according to state of the art;

FIG 2        illustrates a three-level flying capacitor buck-boost converter, according to an embodiment of the present disclosure;

FIG 3        illustrates a three-level flying capacitor buck converter, according to an embodiment of the present disclosure;

FIG 4        illustrates a three-level flying capacitor boost converter, according to an embodiment of the present disclosure;

FIGS 5A-5B    illustrate various embodiments for pre-charging capacitor(s) of the buck-boost converter shown in FIG 2, the buck converter shown in FIG 3, and/or the boost converter shown in FIG 4; and

FIG 6        illustrates a process flow chart of a method for controlling the buck-boost converter shown in FIG 2, the buck converter shown in FIG 3, and/or the boost converter shown in FIG 4, according to an embodiment of the present disclosure.

Various embodiments are described with reference to the drawings, wherein like reference numerals are used to refer like elements throughout. In the following description, for the purpose of explanation, numerous specific details are set forth in order to provide thorough understanding of one or more embodiments. It may be evident that such embodiments may be practiced without these specific details.

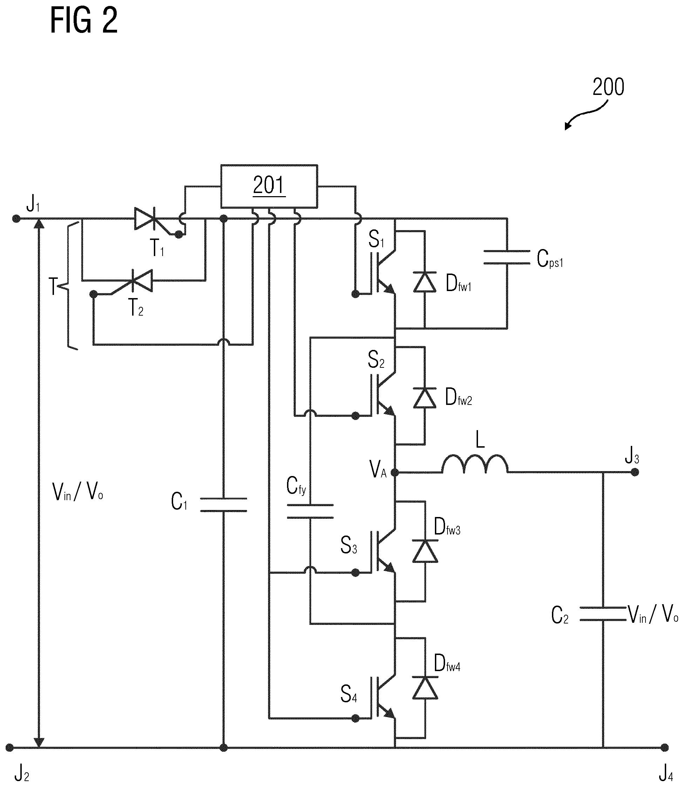

FIG 2 illustrates a three-level flying capacitor buck-boost converter 200, according to an embodiment of the present disclosure. The buck-boost converter 200 is configured to operate at any given time instant in a buck mode of operation or a boost mode of operation. In the buck mode, an output voltage Vo appearing between the third terminal J3 and the fourth terminal J4 is lesser than an input voltage Vin applied between the first terminal J1 and the second terminal J2, during operation of the power converter 200. In the boost mode, an output voltage Vo appearing between the first terminal J1 and the second terminal J2 is greater than an input voltage Vin applied between the third terminal J3 and the fourth terminal J4, during operation of the power converter 200.

The buck-boost converter 200, in addition to the components described in the detailed description of FIG 1, includes an auxiliary switch T that is connected between a first terminal J1 and a first terminal of the first capacitor C1 and to a first terminal of the first switch S1. The auxiliary switch T can be a triac including a pair of thyristors T1, T2 coupled to one another in an anti-parallel configuration as shown in the FIG 2.

Each of the series connected switches S1-S4 and the auxiliary switch T, is connected to a control unit 201 such that the control unit 201 can provide pulses to fire on and fire off the switches S1-S4 and the auxiliary switch T. The control unit 201 comprises microprocessor(s) and/or microcontroller(s) programmed to selectively operate the switches S1-S4 and the auxiliary switch T so as to operate the buck-boost converter 200 in the buck mode of operation and the boost mode of operation while ensuring that the first switch S1 and/or the fourth switch S4 remain protected against a voltage appearing across the first capacitor C1 which is higher than a voltage rating of the switches S1 and/or S4, during operation of the buck-boost converter 200.

The control unit 201 achieves protection of the switches S1 and/or S4 by operating them, that is, turning them on, only after turning on the auxiliary switch T. The control unit 201 turns on the auxiliary switch T only after the flying capacitor $C_{fy}$ or the second capacitor C2 is charged to a respective predetermined voltage level of Vdc/2 and greater than or equal to Vdc/2 respectively.

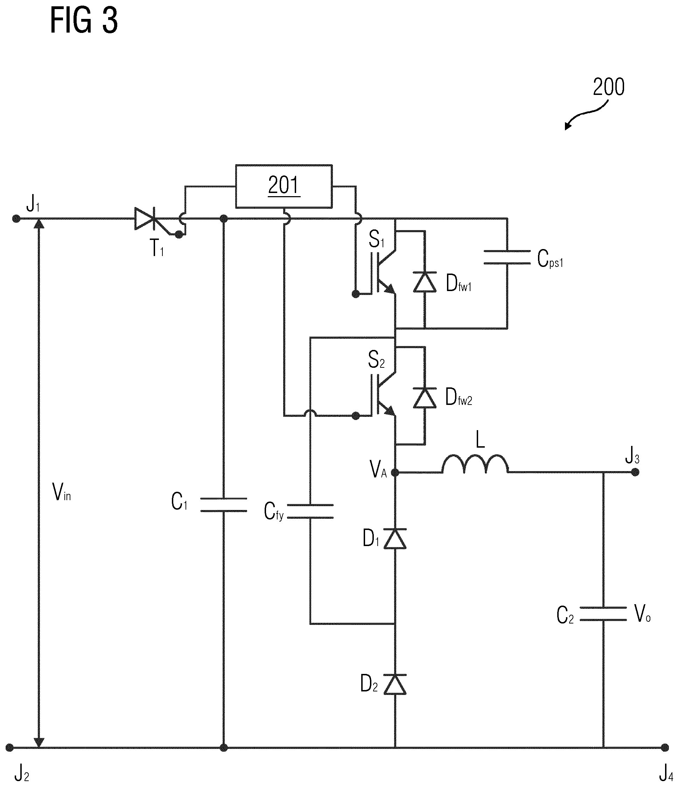

FIG 3 illustrates a three-level flying capacitor buck converter 200, according to an embodiment of the present disclosure. As shown in FIG 3, the auxiliary switch T of the buck converter 200 comprises a single thyristor T1 such that an anode of the thyristor T1 is connected to the first terminal J1 and a cathode of the thyristor T1 is connected to the first terminal of the first capacitor C1. The buck converter 200 also comprises two series connected switches S1 and S2 that are further connected to a pair of diodes D1 and D2. The control unit 201 of the buck converter 200 is connected to the switches S1 and S2 and to the thyristor T1. During operation, the control unit 201 turns on the thyristor T1 after the flying capacitor $C_{fy}$ or the second capacitor C2 is charged to the respective predetermined voltage level, followed by which, the control unit 201 turns on the switches S1 and/or S2, thereby protecting the switch S1 from a voltage higher than its voltage rating appearing thereacross.

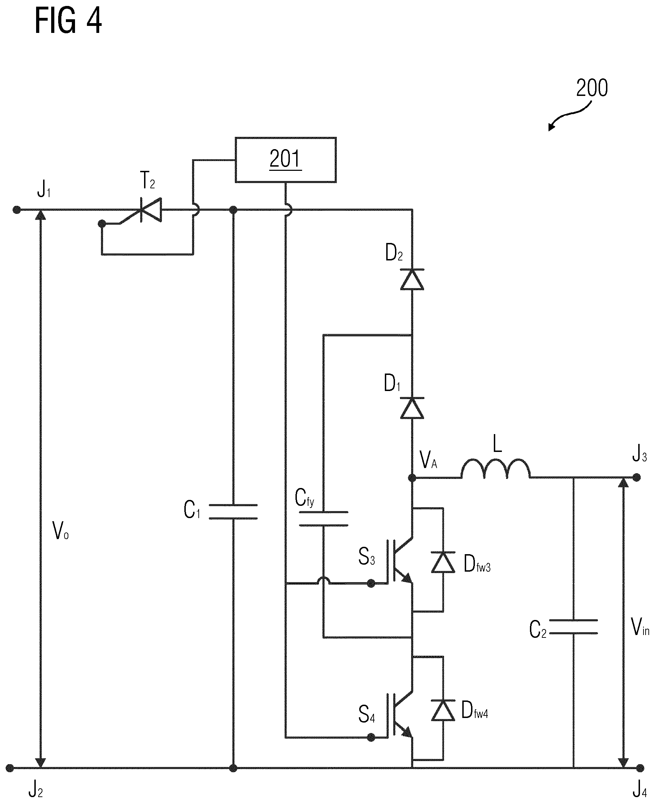

FIG 4 illustrates a three-level flying capacitor boost converter 200, according to an embodiment of the present disclosure. As shown in FIG 4, the auxiliary switch T of the buck converter 200 comprises a single thyristor T2 such that a cathode of the thyristor T2 is connected to the first terminal J1 and an anode of the thyristor T2 is connected to the first terminal of the first capacitor C1. The boost converter 200 also comprises two series connected switches S3 and S4 that are further connected to a pair of diodes D1 and D2 as shown in FIG 4. The control unit 201 of the boost converter 200 is connected to the switches S3 and S4 and to the thyristor T2. During operation, the control unit 201 turns on the thyristor T after the flying capacitor $C_{fy}$ or the second capacitor C2 is charged to the respective predetermined voltage level, followed by which, the control unit 201 turns on the switches S3 and/or S4, thereby protecting the switch S4 from a voltage higher than its voltage rating appearing thereacross.

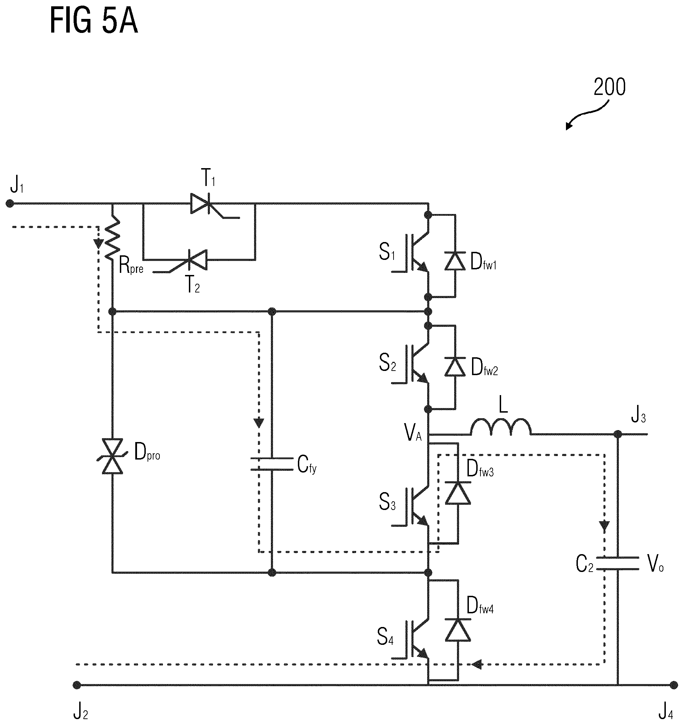

FIGS 5A-5B illustrate various embodiments for pre-charging a flying capacitor $C_{fy}$ or the second capacitor C2 of the buck-boost converter 200 shown in FIG 2, the buck converter 200 shown in FIG 3, and/or the boost converter 200 shown in FIG 4. As described in the detailed description of each of the above FIGS 2-4, the control unit 201 protects the switches S1 and S4 in buck and boost mode of operation by turning on the switch T only after the flying capacitor $C_{fy}$ or the second capacitor C2 are charged to a predefined voltage level.

FIG 5A illustrates one such pre-charging circuit that uses passive components, for example, a passive pre-charging resistor $R_{pre}$. The flying capacitor $C_{fy}$ pre-charges to a predetermined voltage level of Vdc/2 via the current path shown by the dotted line. As the capacitance value of the flying capacitor $C_{fy}$ is quite small compared to that of the second capacitor C2, the flying capacitor $C_{fy}$ gets charged much faster as compared to the second capacitor C2. A Zener diode Dpro when connected across the flying capacitor $C_{fy}$ protects the flying capacitor $C_{fy}$ from overcharging.

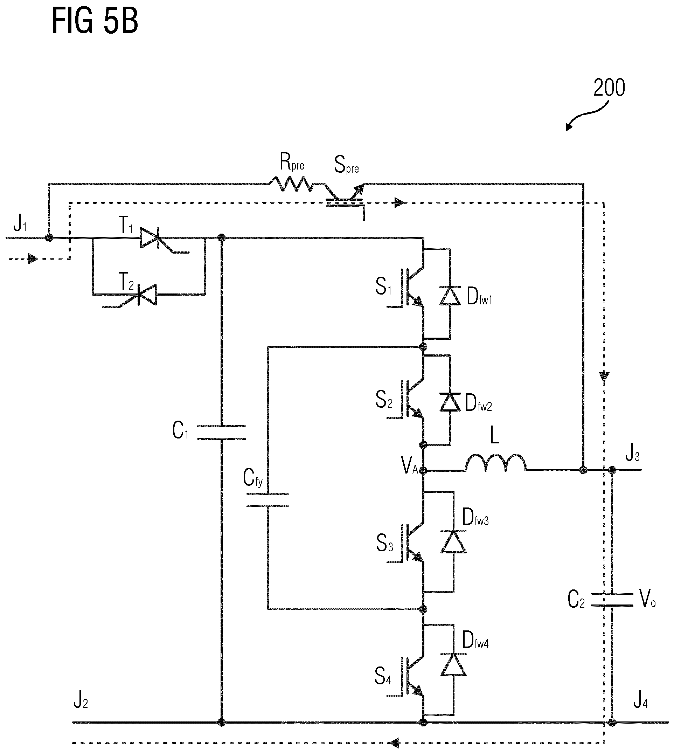

FIG 5B illustrates another pre-charging circuit, for charging the second capacitor C2, that uses active components, for example, a pre-charging switch Spre connected in series with the pre-charging resistor Rpre. The second capacitor C2 pre-charges to a predetermined voltage level greater than or equal to Vdc/2 via the current path shown by the dotted line in the FIG 5B.

Thus, there exist two scenarios wherein either the flying capacitor $C_{fy}$ is pre-charged and the second capacitor C2 has zero or quite low voltage compared to the flying capacitor $C_{fy}$ as shown in FIG 5A, or the second capacitor C2 is pre-charged and the flying capacitor $C_{fy}$ has a rather low voltage as shown in FIG 5B.

In the first scenario where the flying capacitor Cfy is pre-charged, an initial voltage $V_{s1}$ across the switch S1 of the buck converter 200 may be represented as below:

$$V_{S1} <= Vdc - V_{fy}$$

Wherein Vdc is the voltage appearing across the first capacitor C1 and $V_{fy}$ is the voltage appearing across the flying capacitor $C_{fy}$. The flying capacitor $C_{fy}$ is pre-charged so as to maintain $V_{fy}$ at half of the voltage Vdc, that is Vdc/2, thus maintaining $V_{s1}$ equal to or less than half of the voltage Vdc and thereby protecting the switch S1.

In the second scenario where the second capacitor C2 is pre-charged, an initial voltage $V_{s1}$ across the switch S1 of the buck converter 200 may be represented as below:

$$V_{S1} <= Vdc - V_2$$

Wherein Vdc is the voltage appearing across the first capacitor C1 and $V_2$ is the voltage appearing across the second capacitor C2. The second capacitor C2 is pre-charged so as to maintain $V_2$ at half of the voltage Vdc, that is Vdc/2, thus maintaining $V_{s1}$ equal to or less than half of the voltage Vdc and thereby protecting the switch S1.

The precharging of the flying capacitor $C_{fy}$ and the second capacitor C2 may be performed as active precharging, that is, using power semiconductor or mechanical switches or passive precharging, that is, using passive components like resistor, capacitor, etc. In this case, initially, the auxiliary switch T is in an off state. Once the pre-charging of the flying capacitor $C_{fy}$ is completed the auxiliary switch T is turned on and gate pulses are applied to the switches S1-S4 for operating the buck-boost converter 200.

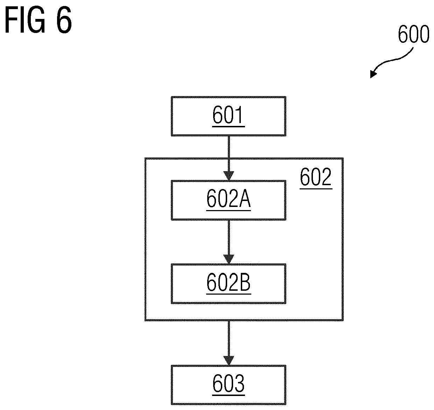

FIG 6 illustrates a process flow chart 600 of a method for controlling the buck-boost converter 200 shown in FIG 2, the buck converter 200 shown in FIG 3, and/or the boost converter 200 shown in FIG 4, according to an embodiment of the present disclosure.

The method at step 601, determines, by employing a control unit 201 whether one of the flying capacitor $C_{fy}$ and the second capacitor C2 is charged to a respective predetermined voltage level of Vdc/2 and greater than or equal to Vdc/2 respectively.

At step 602, the method by employing the control unit 201, controls, the auxiliary switch T by either switching on, at step 602A, the auxiliary switch T, when one of the flying capacitor $C_{fy}$ and the second capacitor C2 is charged to the respective predetermined voltage level or by pre-charging, at step 602B, the flying capacitor $C_{fy}$ or the second capacitor C2, when the flying capacitor $C_{fy}$ or the second capacitor C2 is not charged to the respective predetermined voltage level. At step 602B, the method employs external pre-charging circuitry such as the ones shown in FIGS 5A-5B. At step 603, the method switches on the switches S1-S4, after the auxiliary switch T is turned on for protecting at least one switch S1 or S4 against a voltage appearing across the first capacitor C1 which is higher than a voltage rating of the respective switch S1 or S4, during operation of the buck-boost converter 200.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

List of reference numerals:

| | |
|---|---|
| 100 | buck-boost/DC-DC converter according to state of the art |
| 200 | buck-boost/DC-DC converter according to present disclosure |
| 201 | control unit |
| J1-J4 | terminals |
| S1-S4 | power conversion switches |
| T | auxiliary switch |
| T1 | first thyristor |
| T2 | second thyristor |
| D1, D2, $D_{fw1}$-$D_{fw4}$ | diodes |
| C1 | first capacitor |
| C2 | second capacitor |
| $C_{fy}$ | flying capacitor |
| L | inductor |
| Dpro | Zener diode |
| Rpre | pre-charging resistor |
| Spre | pre-charging switch |

**Claims**

1. A DC/DC power converter (200) configured to operate in one or more of a buck mode of operation and a boost mode of operation, comprising:

   - one or more of a pull-up path and a pull-down path, wherein the pull-up path is formed by at least two series connected switches (S1-S2) and the pull-down path is formed by at least two series connected switches (S3-S4);
   - a first capacitor (C1) connected across the series connected switches (S1-S4) and between a first terminal (J1) and a second terminal (J2) of the power converter (200);
   - a flying capacitor ($C_{fy}$) connected to a connecting node of the pull-up path and a connecting node of the pull-down path;
   - an LC circuit formed by an inductor (L) and a second capacitor (C2), wherein the second capacitor (C2) is connected between a third terminal (J3) and a fourth terminal (J4) of the power converter (200), and wherein the inductor (L) is connected to a mid-point formed between the two of the series connected switches (S2, S3) and the third terminal (J3);

   **characterized by**:

- an auxiliary switch (T) connected between the first terminal (J1) and a common node formed between a first terminal of the first capacitor (C1) and one of the at least two series connected switches (S1) of the pull-up path.

2. The power converter (200) according to the claim 1, wherein:

   - the pull-up path comprises:

     ◦ a first switch (S1) coupled between the first terminal of the first capacitor (C1) and a first terminal of the flying capacitor ($C_{fy}$), wherein a first terminal of the first capacitor (C1) is connected to the auxiliary switch (T) and a second terminal of the first capacitor (C1) is connected to the second terminal (J2) of the power converter (200); and
     ◦ a second switch (S2) coupled between the first terminal of the flying capacitor ($C_{fy}$) and a first terminal of the inductor (L); and

   - the pull-down path comprises:

     ◦ a third switch (S3) coupled between the first terminal of the inductor (L) and a second terminal of the flying capacitor ($C_{fy}$); and
     ◦ a fourth switch (S4) coupled between the second terminal of the flying capacitor ($C_{fy}$) and a common node formed between a second terminal of the first capacitor (C1), the second terminal (J2) of the power converter (200), and a fourth terminal (J4) of the power converter (200).

3. The power converter (200) according to any one of the previous claims, is a buck converter, wherein the auxiliary switch (T) comprises a first thyristor (T1) such that an anode of the first thyristor (T1) is connected to the first terminal (J1) and a cathode of the first thyristor (T1) is connected to the first terminal of the first capacitor (C1).

4. The power converter (200) according to any one of the previous claims, is a boost converter, wherein the auxiliary switch (T) comprises a second thyristor (T2) such that a cathode of the second thyristor (T2) is connected to the first terminal (J1) and an anode of the second thyristor (T2) is connected to the first terminal of the first capacitor (C1).

5. The power converter (200) according to any one the previous claims, is a buck-boost converter, wherein the first thyristor (T1) and the second thyristor (T2) form a triac.

6. The power converter (200) according to any one of the previous claims, comprising a control unit (201) coupled to one or more of the switches (S1, S2, S3, S4, and T), wherein the control unit (201) selectively switches on and switches off the switches (S1, S2, S4, S4, and T) for operating the power converter (200) in one or more of a buck mode of operation and a boost mode of operation.

7. The power converter (200) according to claim 6, wherein the control unit (201) is configured to:

   - determine whether one of the flying capacitor ($C_{fy}$) and the second capacitor (C2) is charged to a respective predetermined voltage level;
   - perform one of:

     ◦ switch on the auxiliary switch (T) when one of the flying capacitor ($C_{fy}$) and the second capacitor (C2) is charged to the respective predetermined voltage level; and
     ◦ pre-charge one of the flying capacitor ($C_{fy}$) and the second capacitor (C2), when one of the flying capacitor ($C_{fy}$) and the second capacitor (C2) is not charged to the respective predetermined voltage level; and

   - selectively turn on one or more of the switches (S1-S4) of the pull-up path and the pull-down path, after the auxiliary switch (T) is turned on for protecting at least one switch (S1 or S4) of the pull-up path and the pull-down path against a voltage appearing across the first capacitor (C1) which is higher than a voltage rating of the at least one switch (S1 or S4), during operation of the power converter (200).

8. A method (600) for controlling a DC/DC power converter (200) according to the claims 1-7, in one of a buck mode of operation and a boost mode of operation, and comprising:

   - determining (601), by employing a control unit (201) of the power converter (200), whether one of the flying capacitor ($C_{fy}$) and the second capacitor (C2) is charged to a respective predetermined voltage level;
- controlling (602), by employing the control unit (201), the auxiliary switch (T) by performing one of:

   ◦ switching on (602A) the auxiliary switch (T) when one of the flying capacitor ($C_{fy}$) and the second capacitor (C2) is charged to the respective predetermined voltage level;
   ◦ pre-charging (602B) of one of the flying capacitor ($C_{fy}$) and the second capacitor (C2), when one of the flying capacitor ($C_{fy}$) and the second capacitor (C2) is not charged to the respective predetermined voltage level, wherein the pre-charging involves employing an external pre-charging circuitry; and

- selectively switching on (603) one or more of the switches (S1-S4), after the auxiliary switch (T) is turned on for protecting at least one switch (S1 or S4) of the pull-up path and the pull-down path against a voltage appearing across the first capacitor (C1) which is higher than a voltage rating of the at least one. switch (S1 or S4), during operation of the power converter (200).

# FIG 1

100

(PRIOR ART)

# FIG 2

FIG 3

FIG 4

FIG 5A

FIG 5B

FIG 6

600

601

602

602A

602B

603

Europäisches
Patentamt

European
Patent Office

Office européen
des brevets

# EUROPEAN SEARCH REPORT

**Application Number**

**EP 23 15 1472**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIU JIANBAO ET AL: "Pre-charge Control Strategy of Three-level Converter Based on Flying Capacitor", 2022 IEEE/IAS INDUSTRIAL AND COMMERCIAL POWER SYSTEM ASIA (I&CPS ASIA), IEEE, 8 July 2022 (2022-07-08), pages 287-291, XP034230739, DOI: 10.1109/ICPSASIA55496.2022.9949843 [retrieved on 2022-11-18] * Section I. INTRODUCTION; figures 1,4,5 * | 1-8 | INV.<br>H02M3/158<br>H02M3/07<br>H02M7/483<br>H02M1/36 |
| X | CN 110 401 344 A (ZHUZHOU CRRC TIMES ELECTRIC CO LTD) 1 November 2019 (2019-11-01) * abstract; figures 1-3,9,11-13 * | 1,8 | |
| X | US 2018/019669 A1 (ZHANG XU [US] ET AL) 18 January 2018 (2018-01-18) * paragraphs [0061], [0062], [0066], [0094]; figure 4B * | 1,8 | TECHNICAL FIELDS SEARCHED (IPC)<br><br>H02M |
| X | WO 2022/023527 A1 (PRODRIVE TECH INNOVATION SERVICES B V [NL]) 3 February 2022 (2022-02-03) * paragraphs [0076], [0077]; figure 9 * | 1,8 | |
| X | EP 2 897 270 A1 (LINEAR TECHN INC [US]) 22 July 2015 (2015-07-22) * paragraphs [0028], [0046]; figures 6,8 * | 1,8 | |
| X | US 2021/194358 A1 (JING YUE [US] ET AL) 24 June 2021 (2021-06-24) * paragraphs [0004], [0031], [0047]; figures 2,4,5 * | 1,8 | |

-/--

The present search report has been drawn up for all claims

| Place of search | Date of completion of the search | Examiner |
|---|---|---|
| The Hague | 7 June 2023 | Kanelis, Konstantin |

EPO FORM 1503 03.82 (P04C01)

page 1 of 2

Europäisches
Patentamt

European
Patent Office

Office européen
des brevets

# EUROPEAN SEARCH REPORT

Application Number

EP 23 15 1472

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 207 542 813 U (NARI TECHNOLOGY CO LTD; STATE GRID NARI NANJING CONTROL SYSTEM CO LTD) 26 June 2018 (2018-06-26) * abstract; figure 2 * | 1,8 | |
| A | US 2020/287458 A1 (MATSUNAGA TATSUKI [JP] ET AL) 10 September 2020 (2020-09-10) * figure 1 * | 1-8 | |
| A | CN 108 134 384 A (UNIV TSINGHUA) 8 June 2018 (2018-06-08) * abstract; figures 9a,9c * | 1-8 | |
| A | CN 107 910 937 A (LANGFANG IN POWER ELECTRIC CO LTD) 13 April 2018 (2018-04-13) * abstract; figure 2 * | 1-8 | |

TECHNICAL FIELDS
SEARCHED        (IPC)

The present search report has been drawn up for all claims

| Place of search | Date of completion of the search | Examiner |
|---|---|---|
| The Hague | 7 June 2023 | Kanelis, Konstantin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 23 15 1472

This annex lists the patent family members relating to the patent documents cited in the above-mentioned European search report.
The members are as contained in the European Patent Office EDP file on
The European Patent Office is in no way liable for these particulars which are merely given for the purpose of information.

07-06-2023

| Patent document cited in search report | | Publication date | Patent family member(s) | | Publication date |
|---|---|---|---|---|---|
| CN 110401344 | A | 01-11-2019 | NONE | | |
| US 2018019669 | A1 | 18-01-2018 | CN | 109478842 A | 15-03-2019 |
| | | | CN | 109478843 A | 15-03-2019 |
| | | | CN | 109565240 A | 02-04-2019 |
| | | | EP | 3485560 A1 | 22-05-2019 |
| | | | EP | 3485561 A1 | 22-05-2019 |
| | | | EP | 3485562 A1 | 22-05-2019 |
| | | | TW | 201813263 A | 01-04-2018 |
| | | | TW | 201817147 A | 01-05-2018 |
| | | | TW | 201817148 A | 01-05-2018 |
| | | | US | 2018019665 A1 | 18-01-2018 |
| | | | US | 2018019666 A1 | 18-01-2018 |
| | | | US | 2018019669 A1 | 18-01-2018 |
| | | | US | 2018294717 A1 | 11-10-2018 |
| | | | WO | 2018013183 A1 | 18-01-2018 |
| | | | WO | 2018013184 A1 | 18-01-2018 |
| | | | WO | 2018013185 A1 | 18-01-2018 |
| WO 2022023527 | A1 | 03-02-2022 | CN | 116057825 A | 02-05-2023 |
| | | | EP | 4189825 A1 | 07-06-2023 |
| | | | KR | 20230043884 A | 31-03-2023 |
| | | | NL | 2026176 B1 | 04-04-2022 |
| | | | WO | 2022023527 A1 | 03-02-2022 |
| EP 2897270 | A1 | 22-07-2015 | CN | 104795989 A | 22-07-2015 |
| | | | EP | 2897270 A1 | 22-07-2015 |
| | | | TW | 201530998 A | 01-08-2015 |
| | | | US | 2015207401 A1 | 23-07-2015 |
| US 2021194358 | A1 | 24-06-2021 | NONE | | |
| CN 207542813 | U | 26-06-2018 | NONE | | |
| US 2020287458 | A1 | 10-09-2020 | DE | 112018005881 T5 | 06-08-2020 |
| | | | JP | 6661831 B2 | 11-03-2020 |
| | | | JP | WO2019097746 A1 | 21-11-2019 |
| | | | US | 2020287458 A1 | 10-09-2020 |
| | | | WO | 2019097746 A1 | 23-05-2019 |
| CN 108134384 | A | 08-06-2018 | NONE | | |
| CN 107910937 | A | 13-04-2018 | NONE | | |

EPO FORM P0459

For more details about this annex : see Official Journal of the European Patent Office, No. 12/82